# EUROPEAN PATENT APPLICATION

(11) **EP 4 464 598 A1**
(43) Date of publication of application: **20.11.2024**
(21) Application number: 23173949.1
(22) Date of filing: 17.05.2023
(51) Int. Cl.: B64D 11/00, B64D 11/06

(54) **SEPARATION WALL FOR AN AIRCRAFT CABIN**

(71) Applicant: Lilium GmbH, 82234 Wessling (DE)
(72) Inventor: Caruso, Alberto, 82234 Wessling (DE); Vanicek, Thomas, 82234 Wessling (DE); Stephan, Markus, 82234 Wessling (DE); Ketisch, Johannes, 82234 Wessling (DE)
(74) Representative: Kurths, Gerrit Karsten

(57) **Abstract**

The invention relates to a separation wall (10) for an aircraft cabin (1) with at least two cabin sections (2, 3) to be separated from each other, the cabin sections (2, 3) having an inner cabin contour (4), comprising a group of separate wall sections (20-24), including at least one static wall section (20), and at least one movable wall section (21-24). A separation wall (10) having the advantage of allowing for a passage through the aircraft cabin (1) with maximum space available to and minimal obstruction to the traversing passenger is characterised in that that the at least one static wall section (20) is connected to a first part of the inner cabin contour (4) of the cabin sections to stay in place during operation, and that the movable wall section is pivotably attached by a first pivotal connection (30) to the static wall section (20) and forming a foldable flap to set the separation wall into a folded position or into an unfolded position.

## Description

The invention relates to a separation wall for an aircraft cabin according to the preamble of claim 1.

With the recent advancement in personal aircraft technology, especially electric vertical take-off and landing vehicles (eVOTL), the need for even more improved and refined structures aboard the aircraft has become more imminent. The improvement of the use of space and the reduction of weight are sought after solutions.

In EP1 106502A1 a stowable aircraft cabin vertical separation wall is shown. The vertical separation wall comprises at least three rigid rectangular-shaped panels attached to each other by panel hinges along the horizontal joints between the panels, that permit the separation wall to hang vertically when in use and to be fan folded along the joints when stowed, a separation wall support to which the separation wall is attached near or along its top edge, and a stowage support which holds the fan-folded separation wall next to the support for stowage. A portion of the panels form a vertically-hinged cabin access door having a sufficient number of vertical and horizontal hinges to keep the panels of the access door in a planar alignment with each other when the partition is in use, and to be fan folded with the rest of the separation wall when the separation wall is stowed.

In DE3917206A, a fire-proof separation wall between passenger and freight compartments is shown. The partitions have fire-proof closable passages. A folding door formed from two hinged parts above the passage pivots around a horizontal axis and may be locked onto the roof, when folded.

Disadvantageously, the operability of the separation wall is complex and the hinged doors require a door frame to be operable and stowable. When installed or operated, this severely limits the access to the connected cabin sections and the space in the aircraft cabin in general.

An object of the present invention is thus to improve the operability of a separation wall in regard to achieving an improved space utility of the aircraft cabin.

This object is solved by the separation wall for an aircraft cabin as defined in independent claim 1.

The invention relates to a separation wall for an aircraft cabin with at least two cabin sections to be separated from each other, especially at a separation plane, separating the at least two cabin sections in a longitudinal direction of the aircraft. The cabin sections have, especially share, an inner cabin contour, comprising a group of separate wall sections, including at least one static wall section, and at least one movable wall section. The aircraft cabin comprises a cabin floor, left and right cabin side walls and a cabin ceiling. The inner contour of the cabin sections circumscribes the cabin floor, the cabin side walls and the cabin ceiling of the aircraft cabin.

The invention solves the object in that the at least one static wall section is, especially detachably or non-detachably, connected to a primary part of the inner cabin contour of the cabin sections to stay in place during operation, and that the movable wall section is pivotably attached by a first pivotal connection to the static wall section and forming a foldable flap to set the separation wall into a folded position or into an unfolded position. Especially, the movable wall sections of the group of separate wall sections may form a frameless foldable flap that serves as a cabin door being attachable directly to the cabin contour. A flap may be a free and movable end wall section. A foldable flap may be foldable in on itself, especially comprising further movable wall sections.

Further, the static wall section may be fastened to the inner cabin contour through a fastening device. The static wall section may be a wall section that stays in place under normal operation conditions, but may still be removable, such that the separation wall is portable. Each or any of the wall sections may stretch across the height of the aircraft cabin and may connect the cabin floor to the cabin ceiling or stretch across a width of the aircraft cabin and may connect the left and right cabin side walls.

According to a basic idea of the invention, a solution is suggested for limiting undesired space consumption of the separation plane in an open position of the separation wall and to enable easy access between the two cabin sections by setting the separation wall into a folded position or into an unfolded position. Further, the separation wall comprises a static section that is connected to a primary part of the inner cabin contour that allows for the separation wall to use the whole inner diameter of the aircraft cabin. The space in an aircraft cabin is very limited. Usually, many compartments for stowing equipment and luggage are arranged at the sides of the aircraft cabin. The invention is designed for an aircraft cabin of a more compartmentalized aircraft with less stowing space, in which the luggage and the equipment is stowed in a specialized cabin section of the aircraft. Thus, freeing the cabin of use of side stowing compartments. To separate two or more cabin sections of such an aircraft, according to the invention a new design of a separation wall is suggested that fills in the inner contour of the cabin sections and allows for a passage through the aircraft cabin with maximum space available given by the foldable flap and minimal obstruction to the traversing passenger. Another surprising advantage of the separation wall according to the invention is the creation of a sound barrier in between the inner cabin contour to attenuate sound waves inside the aircraft cabin. The separation wall may even be angled or arched to deflect sound waves. The angle or arch shape of the separation wall may be with respect to a cross section in a plane spanned by the longitudinal axis and the transversal axis. Each or any of the static wall sections may have a normal vector that points in a different direction from a normal vector of each or any of the movable wall sections in the unfolded position of the separation wall.

Advantageous embodiments are defined in the dependent claims. Note that the features mentioned in the introductory part of this description may individually or in any combination thereof also be provided in the presently disclosed solution, if not mentioned or evident otherwise.

According to an embodiment of the separation wall, in the unfolded position an outer shape of the group of wall sections may be adapted to the inner cabin contour of the cabin sections, especially at the separation plane and/or at the shared inner cabin contour of the sections. Advantageously, this improves movability as it is possible to keep the aircraft cabin favourably held free of door frames or other obstructing side and floor rails or stowing compartments in the area of the separation plane of the separation wall. Further, sound diffraction is improved, i.e. reduced, as less edges are deployed in the separation plane, especially edges perpendicular to the separation plane, increasing sound diffraction around the edges.

In yet a further embodiment of the separation wall each or any of the pivotal connections comprises at least a continuous joint, wherein the continuous joint stretches across at least a section of the respective pivotal connection of the two adjoined wall sections of said respective pivotal connection. The continuous joint may stretch across at least 30%, preferably 40%, 50%, 60%, 70% or 80%, of a length of the respective pivotal connection. Having a continuous joint increases the force distribution along the length of the pivotal connection during rotation and allows for a thinner design of the adjoining wall sections. Additionally or alternatively, the pivotal connection may favourably be a folding seam and/or an integral hinge of the adjoining wall sections. Preferably, each or any of the pivotal connections may be oriented vertically.

Moreover, in a further embodiment of the separation wall each or any of the pivotal connections of the separation wall may be a spring-loaded connection, especially a spring-loaded folding seam and/or a spring-loaded integral hinge. Further preferably, a spring may be located inside the first pivotal connection or each or any secondary pivotal connection. In addition or as an alternative, a spring may be located under a surface cover of the group of wall sections.

According to another embodiment of the separation wall each or any of the wall sections of the group of wall sections comprises an inner panel made of a carbon fibre and/or a composite material and/or a polyurethane polymer, especially a polyurethan foam. This advantageously imparts better sound absorption to the separation wall. Preferably, the inner panel might be covered by a surface cover.

According to a yet another embodiment of the separation wall each or any of the inner panels may be designed as a single plate, multiple plates and/or as a frame, especially the frame comprising at least one hollow frame section. Plates, especially single plates allow for the best sound reflection while frames and plates combined with a sound absorbing cover material allow for a particularly good sound absorption.

Further, the separation wall may be improved in that the wall sections of the group of wall sections have a common outer surface cover covering each or any of the pivotal connections attaching the wall sections to each other. This further increases the sound absorption of the separation wall. The cover may comprise a textile, especially a felt and/or a mesh, preferably a polyurethane felt. Additionally, this improves the haptic experience when handling the separation wall and may further increase the sound absorption. Further, the cover may comprise a transparent section, the transparent section preferably corresponding to hollow frame section of the frame. This advantageously allows for the creation of a window-like section in the separation wall. The cover may stretch across a connection between the wall sections and the cabin contour.

The cover may be a singular piece of material and/or may stretch across all wall sections.

Moreover, according to another embodiment of the separation wall, each or any of the pivotal connections may be a folding seam, especially being made of at least a part of the common outer surface cover. A folding seam allows for a hinge advantageously easy to manufacture. Further advantageously it allows for thin wall sections adjoining the seam without bulges.

Additionally, the that at least two or more of the pivotal connections fold in an opposing direction to one or both of their neighbouring pivotal connections. Moreover, pairings of two or more wall sections may be connected with pivotal connections that fold attached pairings of wall sections in opposing directions. This advantageously allows for a space-saving stowing of the flap.

In a preferred embodiment of the separation wall, the group of wall sections and/or each or any of the inner panels and/or the common outer surface cover has a Noise Reduction Coefficient, abbreviated NRC, of at least 0,5, preferably 0,6, more preferably 0,7. NRC is a single-number index that averages the Sound Absorption Coefficients, abbreviated SAC, of a material across a range of frequencies, the frequencies typically may be chosen from frequencies in the audible frequency range, especially at 250, 500, 1000, 2000 Hz and 4000Hz. Further frequencies may be included that match the frequencies with the highest amplitude of the aircraft engines or frequencies that match multiple multiples of the engine's fundamental rotational frequency. NRC values range from no absorption at 0 to total absorption at 1.

In another embodiment of the separation wall, the at least one movable wall section may be detachably attached to a secondary part of the inner cabin contour of the cabin sections. The second part may be a remaining part of the inner contour of the cabin sections while the first part is a primary part of the inner cabin contour of the cabin sections. Attaching the movable wall section to the inner cabin contour allows for an even better improvement of sound absorption and/or reflection, while simultaneously take in minimal space inside the aircraft cabin, limited to the thickness of the separation wall.

Furthermore, the at least one movable wall section may comprise magnetic inserts for detachably attaching the at least one movable wall section to the inner cabin contour by forming a magnetic connection. Magnetic connections may be created through arranging one or more magnets at the inner cabin contour, especially in or near the separation plane, and one or more magnets inside the separation wall, especially in an end wall section or in any or each of the movable wall sections, wherein the magnet in the separation wall are preferably arranged in a location allowing for a magnetic connection to form when the separation wall is in an unfolded position.

In a further improvement of the separation wall the group of wall sections may comprise at least one secondary moveable wall section pivotably attached by at least one secondary pivotal connection to the movable wall section. The movable wall section attached to the static wall section may be referred to as primary moveable wall section. The pivotal connection of the primary movable wall section to the static wall section may be referred to as the primary pivotal connection. Preferably the group of wall sections may comprise multiple secondary wall sections attached to the primary movable wall section, especially attached in a row, wherein each secondary movable wall section attached to the previous secondary wall section through another secondary pivotal connection. In the case of multiple secondary wall sections, the secondary wall sections may be attached to each other and/or to the primary movable wall section. The secondary wall section or the multiple secondary wall sections may be detachably attachable to the secondary part or a remaining part apart from the primary part of the inner cabin contour of the cabin sections.

According to another embodiment of the invention, in the folded position multiple wall sections of the group of wall sections overlap each other at least partially, especially in a longitudinal direction of the aircraft cabin.

According to another aspect of the invention, a fastening device is proposed, including a bracket system and/or an attachment bar for fastening a separation wall, preferably according to one of the separation walls described above, to an inner cabin contour of at least two cabin sections of an aircraft cabin, wherein the bracket system and/or the attachment bar is mounted to a first part of the inner cabin contour following the inner cabin contour.

Note that herein, the orientation of the subject matter is described in the three main axes of an aircraft, which corresponds to the three main axes of the aircraft cabin. The longitudinal axis runs lengthwise through the centre of the aircraft from the nose to the tail. It is also known as the roll axis, and it is the axis around which the aircraft rolls. The transversal axis runs across the aircraft, perpendicular to the longitudinal axis. It is also known as the pitch or lateral axis, and it is the axis around which the aircraft pitches. The vertical axis runs vertically through the centre of the aircraft. It is also known as the yaw axis, and it is the axis around which the aircraft yaws.

Further advantages and features result from the following description of some preferred embodiments as well as the dependent claims.

In the following, an embodiment of the invention will be described with reference to the attached schematic figures. Features which correspond to one another with regard to their type and/or function may be assigned the same reference signs throughout the figures.
- Fig. 1: shows a schematic illustration of a separation wall according to an embodiment of the invention in an unfolded position.
- Fig. 2: shows a schematic illustration the separation wall according to the embodiment of the invention in a folded position.
- Fig. 3: shows a section view of a separation wall according to a second embodiment of the invention in an unfolded position.
- Fig. 4: shows a section view of the separation wall according to the second embodiment of the invention in a folded position.

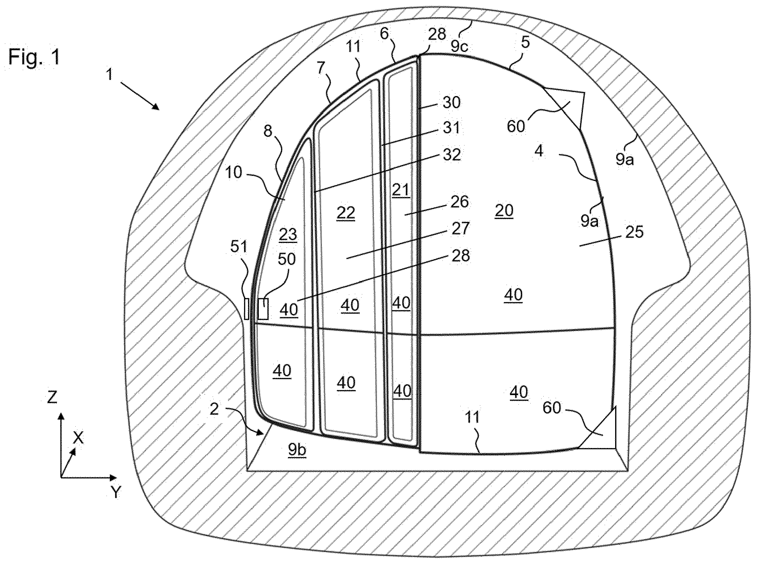

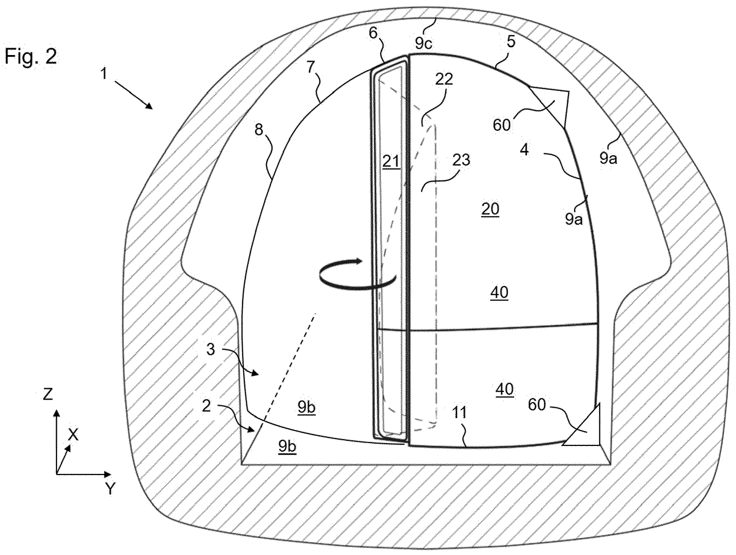

Fig. 1 and Fig. 2 show a first embodiment of a separation wall 10 for an aircraft cabin 1. The aircraft cabin 1 is shown in a one-point perspective and the main axes X, Y, Z of the aircraft with the aircraft cabin 1 are displayed on the lefthand side in the drawings. The main axes are the longitudinal axis X, the transversal axis Y and the vertical axis Z.

Fig. 1 shows the first embodiment of a separation wall 10 for an aircraft cabin 1 having at least two cabin sections 2, 3, wherein the first cabin section 2 is shown in the drawings of both Fig. 1 and 2, wherein the second cabin section 3 is only visible in Fig. 2. The two cabin sections 2, 3 are to be separated from each other by the separation wall 10. The two cabin sections 2, 3 share an inner cabin contour 4. The inner cabin contour 4 follows and circumscribes a left and right cabin wall 9a, a cabin floor 9b and a cabin ceiling 9c of the cabin sections 2, 3 and surrounds a separation plane, which in this embodiment is completely covered by the separation wall 10 when set in an unfolded position. In other words, in the unfolded position an outer shape 11 of the group of wall sections 20-23 is adapted to the inner cabin contour 4 of the cabin sections 2, 3. The inner cabin contour 4 and the separation plane are arched in the longitudinal direction L along a central line parallel to the longitudinal axis L and thus forming an almost triangular or arched shape of a cross section of the separation wall 10 in this exemplary embodiment of the invention, the cross section being on a plane parallel to a plane spanned by the longitudinal axis X and transversal axis Y of the aircraft.

The separation wall 10 comprises a group of four separate wall sections 20-23, including one static wall section 20, shown in the drawings of Fig. 1 and 2 on the outermost right side of the group of wall sections 20-23. Attached to the static wall section 20 are three movable wall sections 21-23 arranged in a lateral row. One after another from right to left these wall sections 21-23 are a first movable wall section 21, a second movable wall section 22 and a third movable wall section 23. The static wall section 20 is detachably connected to a primary part 5 of the inner cabin contour 4 of the cabin sections 2, 3 to stay in place during operation of the aircraft on the ground and in the air. To securely attach the static wall section 20 to the inner cabin contour 4 a fastening device 60 is used. The movable wall sections 21-23 are detachably attached to respective secondary parts 6-8 of the inner cabin contour 4 of the cabin sections 2, 3. Each of the wall sections 20-23 takes up a space between the cabin floor 9b and the cabin ceiling 9c.

Each of the wall sections 20-23 comprises an inner plate 25-28 with a tapered edge 28 each. The inner plates 25-28 each are designed as a single plate and are made of a polyurethane polymer.

The first movable wall section 21 is pivotably attached to the static wall section 20 by a primary pivotal connection 30. Further, two neighbouring wall sections each of the movable wall sections 21, 22, 23 are connected by secondary pivotal connections 31, 32. The entirety of the movable wall sections 21-23 forms a foldable flap to set the separation wall 10 into an unfolded position as shown in Fig. 1 or into a folded position as shown in Fig. 2. Each of the pivotal connections 30-32 is oriented vertically.

The primary pivotal connection 30 is designed as a folding seam, wherein the adjacent wall sections 20, 21 each have a thin tapered edge at the pivotal connection 30. Moreover, in this exemplary embodiment, the two adjacent tapered edges of the static wall section 20 and the first movable wall section 21 are connected by a surface cover 40, wherein the surface cover 40 is sewn to the inner plates 25-28 of the respective wall sections 20-23 along the edges of the inner plates 25-28. In this particular example, the surface cover 40 stretches across the entire separation wall 10, including the pivotal connections 30-32 and forms a part of the pivotal connections 30-32. Similarly, the second movable wall section 22 is attached to the first movable wall section 21 by a first secondary pivotal connection 31, and the third movable wall section 23 is attached to the second movable wall section 22 by a second secondary pivotal connection 32. Therein, the surface cover 40 is a part of the first and second secondary pivotal connection 31, 32 as well and connects the adjacent wall sections 21-23 pairwise to each other. The pivotal connections 30-32 stretch across the entire vertical length of the adjoined wall sections 20-23 and thus form a continuous joint each.

Additionally, the secondary pivotal connections 31, 32 between the movable wall sections 21-23 are spring-loaded in a direction to unfold the separation wall 10 from the fold position into the unfold position. The movable wall sections 21-23 are spring-loaded by pre-tensioned stretching fibres in the cover 40. Each of the pivotal connections with the exception of the primary pivotal connection 30 between the static wall section 20 and the first movable wall section 21, folds in an opposing direction to a folding direction of their respective neighbouring pivotal connections 31-32.

The combination of inner plates 25-28 and the cover 40 forms a separation wall that has a group of wall sections with a Noise Reduction Coefficient of 0,6.

To cover any holes or unevenness between the inner cabin contour 4 of the aircraft cabin 1 and an edge of the separation wall 10, the cover 40 comprises a circumferential material turnover at its outer edge to connect to the inner cabin contour 4. This further increases the sound absorption of the separation wall 10.

Moreover, the outer most third movable wall section 23 comprises a magnetic insert 50 for detachably attaching the third movable wall section 23 to the cabin section 2 by forming a magnetic connection to a magnet 51 in the inner cabin contour 4.

Thus, a convenient and secure separation wall 10 is created that separates two cabin sections 2, 3 of an aircraft cabin 1.

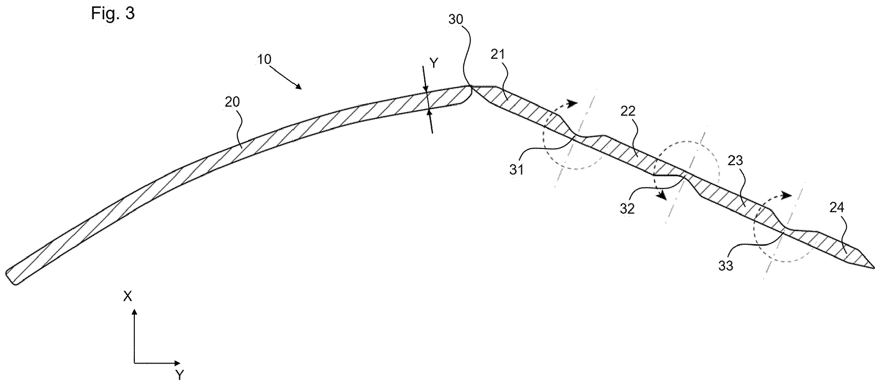

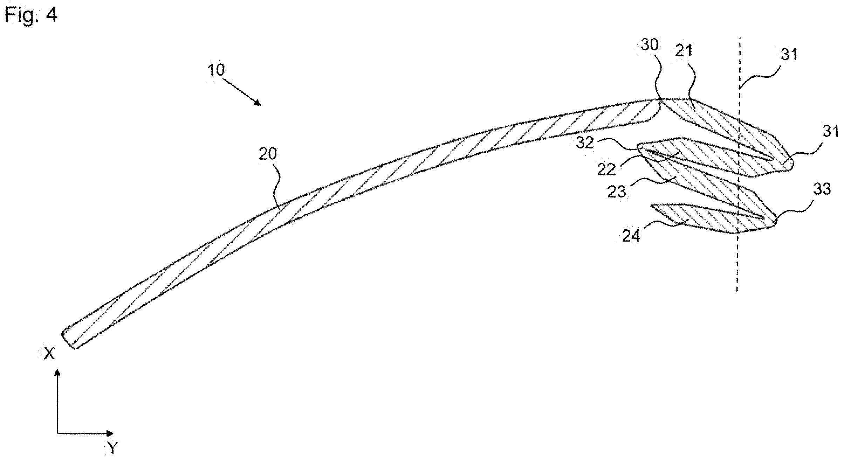

In Fig. 3 and Fig. 4 a second embodiment of the separation wall 10 according to the invention is shown. The separation wall 10 is set to an unfolded position in Fig. 3 and set to a folded position in Fig. 4.

The separation wall 10 comprises a static wall section 20 and four movable wall sections 21-24, that are connected to each other by pivotal connections 30-33 as described in the first embodiment displayed in Fig. 1 and 2. In contrast to the first embodiment, the separation wall 10 does not comprise a cover 40 but rather the pivotal connections 30-33 are made of the same material as the inner plates 25-29 of the wall sections 20-24. The primary pivotal connection 30 is not spring-loaded and may be bend in any direction by an operating person. The secondary pivotal connections 31-33 are formed by pre-tensioned thin layers of material. The pre-tensioned thin layers form spring-loaded pivotal connections. Two of neighboring secondary pivotal connections 31-33 of the pivotal connections 31-33 each bend into opposite directions as indicated by the circular arrows. Near the secondary pivotal connections 31-33, the thickness t of the wall sections 20-24 decreases gradually towards a minimal thickness tₘᵢₙ to form thin secondary pivotal connections 31-33. As can be seen in Fig. 4 when the separation wall 10 is folded into the folded position, the thin secondary pivotal connections 31-33 form bulges of elastic material that allows for spring-loading the pivotal connection 30-33 to pivot the adjacent wall sections 22-24 towards the unfolded position.

In the folded position, the movable wall sections 21-24 of the group of wall sections 20-25 overlap each other as indicated by the dotted line to allow for a compact folded separation wall 10.

Further, as the separation wall 10 is made entirely out of a polymer foam, the attenuation of sound waves by the separation wall 10 is high.

Furthermore, this separation wall 10 according the second embodiment is particularly easy to handle and allows for installation in a minimal space while at the same time providing an excellent noise dampening.

### List of reference signs

- 1: aircraft cabin
- 2: first cabin section
- 3: second cabin section
- 4: inner cabin contour
- 5: part of the inner cabin contour, primary part
- 6: part of the inner cabin contour, first secondary part
- 7: part of the inner cabin contour, second secondary part
- 8: part of the inner cabin contour, third secondary part
- 9a: inner cabin wall
- 9b: cabin floor
- 9c: cabin ceiling

- 10: separation wall
- 11: outer shape

- 20: static wall section
- 21: first movable wall section
- 22: second movable wall section
- 23: third movable wall section
- 24: fourth movable wall section, end wall section
- 25-29: inner plates

- 30: primary pivotal connection
- 31: first secondary pivotal connection
- 32: second secondary pivotal connection
- 33: third secondary pivotal connection
- 40: surface cover
- 50: magnetic insert
- 51: magnet
- 60: fastening device

- t: thickness
- tₘᵢₙ: minimal thickness

- X: Longitudinal Axis
- Y: Transversal Axis
- Z: Vertical Axis

## Claims

1. Separation wall (10) for an aircraft cabin (1) with at least two cabin sections (2, 3) to be separated from each other, the cabin sections (2, 3) having an inner cabin contour (4), comprising
a group of separate wall sections (20-24), including at least one static wall section (20), and at least one movable wall section (21-24), **characterized in**
**that** the at least one static wall section (20) is connected to a primary part (5) of the inner cabin contour (4) of the cabin sections (2, 3) to stay in place during operation,
**that** the movable wall section (21-24) is pivotably attached by a first pivotal connection (30) to the static wall section (20) and forming a foldable flap to set the separation wall (10) into a folded position or into an unfolded position.

2. Separation wall according to claim 1, **characterized in that** in the unfolded position an outer shape (11) of the group of wall sections (20-24) is adapted to the inner cabin contour (4) of the cabin sections (2, 3).

3. Separation wall according to any of the preceding claims, **characterized in that** each or any of the pivotal connections (30-33) comprises at least a continuous joint, wherein the continuous joint stretches across at least a section of the respective pivotal connection (30-33) of the two adjoined wall sections (20-24) of said respective pivotal connection (30-33).

4. Separation wall according to any of the preceding claims, **characterized in that** each or any of the pivotal connections (30-33) is a spring-loaded connection.

5. Separation wall according to any of the preceding claims, **characterized in that** each or any of the wall sections (20-24) of the group of wall sections (20-24) comprises an inner panel (25-29) made of a carbon fiber and/or a composite material and/or a polyurethane polymer.

6. Separation wall according to claim 6, **characterized in that** each or any of the inner panels (25-29) is designed as a single plate, multiple plates and/or as a frame.

7. Separation wall according to any of the preceding claims, **characterized in that** the wall sections (20-24) of the group of wall sections (20-24) have a common outer surface cover (40) covering each or any of the pivotal connections (30-33) attaching the wall sections (20-24) to each other.

8. Separation wall according to any of the preceding claims, **characterized in that** each or any of the pivotal connections (30-33) is a folding seam.

9. Separation wall according to claim 8, **characterized in that** at least two or more of the pivotal connections (30-33) fold in an opposing direction to one or both of their neighbouring pivotal connections (30-33).

10. Separation wall according to any of the preceding claims, **characterized in that** the group of wall sections has a Noise Reduction Coefficient of at least 0,5, preferably 0,6, more preferably 0,7.

11. Separation wall according to any of the preceding claims, **characterized in that** the at least one movable wall section (21-24) is detachably attached to a secondary part (6-8) of the inner cabin contour (4) of the cabin sections (2, 3).

12. Separation wall according to claim 11, **characterized in that** the at least one movable wall section (21-24) comprises magnetic inserts (50) for detachably attaching the at least one movable wall section (21-24) to the inner cabin contour (4) by forming a magnetic connection.

13. Separation wall according to any of the preceding claims, **characterized in that** the group of wall sections (20-24) comprises a further moveable wall section (22-24) pivotably attached by a second pivotal connection (31-33) to the movable wall section (21-23).

14. Separation wall according to any of the preceding claims, **characterized in that** in the folded position multiple wall sections (20-24) of the group of wall sections (20-24) overlap each other at least partially.

15. Fastening device (60) including a bracket system and/or an attachment bar for fastening a separation wall (10) according to any one of the preceding claims to an inner cabin contour (4) of at least two cabin sections (2, 3) of an aircraft cabin (1), wherein the bracket system and/or the attachment bar is mounted to a first part of the inner cabin contour following the inner cabin contour.
